# EUROPEAN PATENT SPECIFICATION

(11) **EP 1 170 950 B1**
(45) Date of publication and mention of the grant of the patent: **03.05.2006**
(21) Application number: 01305749.2
(22) Date of filing: 03.07.2001
(51) Int. Cl.: H04N 7/173

(54) **Use of local equipment by mobile phone**
Benutzung von lokaler Einrichtung durch Mobilfunkgerät
Usage d'équipement local par un téléphone mobile

(30) Priority: 07.07.2000 GB 0016756
(43) Date of publication of application: 09.01.2002
(73) Proprietor: Hewlett-Packard Company, Palo Alto, CA 94304 (US)
(72) Inventor: Squibbs, Robert Francis, Bristol BS35 5RJ (GB)
(74) Representative: Squibbs, Robert Francis

(56) References cited:
- WO-A-97/22212
- WO-A-98/36552
- WO-A-98/56181
- WO-A-99/67904
- DE-A- 4 424 380

## Description

### Field of the Invention

The present invention relates to the use of local equipment by a mobile entity, for example for the output of information selected by a mobile entity to a visual display or printer.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

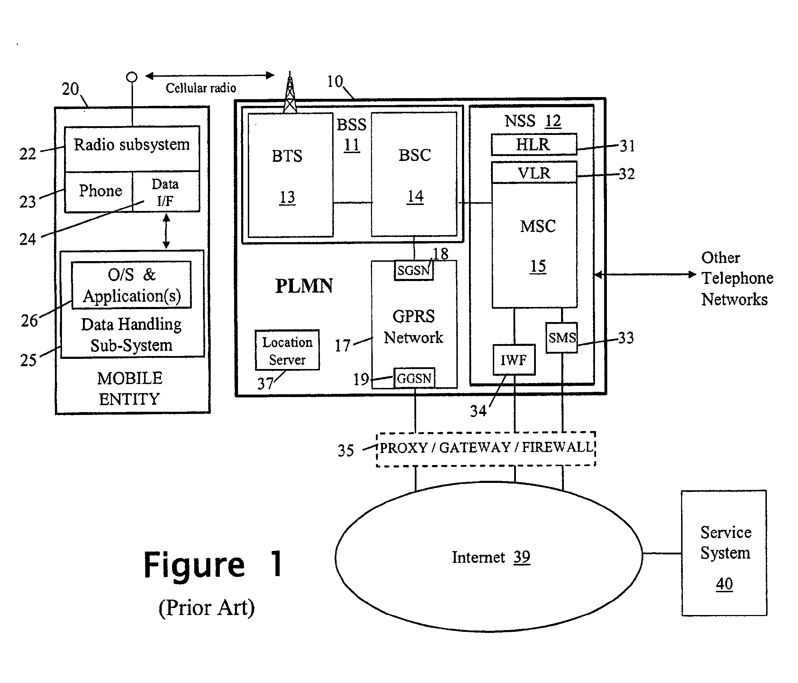

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 32.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an InterWorking Function IWF 34 the precise nature of which depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

Recently, there has been increasing interest in providing short-range wireless communication technologies in mobile devices either alone or in conjunction with cellular radio transceivers. A number of technologies exist for the short range communication of information. These technologies include infra-red based technologies and low-power radio technologies (including, in particular, the recent "Bluetooth" short range wireless standard). Depending on the technology implementation, differing types of message propagation will be enabled including asynchronous message broadcast, and multicast and point-to-point duplex connections established after coordination and negotiation between communicating devices.

Another area that has attracted much attention recently is that of "location-aware" services for mobile users, these being services that take account of the current location of the user (or other mobile party). Location-aware services all require user location as an input parameter. A number of methods already exist for determining the location of a mobile user as represented by an associated mobile equipment. Example location-determining methods include the use of GPS systems in mobile equipment, cellular-radio based techniques enabling the location of a mobile device to be determined either in the mobile radio infrastructure or by the mobile device itself, short range beacons transmitting location information to nearby devices, and short-range receivers that can detect nearby devices and establish their location for connected equipment. As can be seen, some of these methods result in the user knowing their location thereby enabling them to transmit it to a location-aware service they are interested in receiving, whilst other of the methods result in the user's location becoming known to a network entity from where it can be supplied directly to a location-aware service. In this latter category are location servers, such as location server 37 of Figure 1, which provide a focal point for location requests and are operative to ascertain the location of an identified device when requested by using infrastructure resources. Thus, in Figure 1 the location server 33 services a location request by asking the relevant BSS to carry out a position fix on a target device (for example, by making Timing Advance measurements for three BTSs 13 and using these measurements to derive location, this derivation typically being done in a unit associated with BSC 14). Use of a location server generally requires authorisation from the device user, either on a per request basis or generically in respect of a particular service.

One problem with mobile devices is that the requirement for portability places significant restrictions on the possibilities for information output in visual or hardcopy form. In particular, mobile phones generally have very limited display capability and no hard copy production capability. Of course, many mobile devices do have means by which they can be hooked up to displays and printers when a user is at home or at their workplace. However, there are many occasions when a user does not have access to their own auxiliary display devices and printers.

WO 98/36552 discloses an arrangement in which a cell-phone user uses their phone to send commands, via a cellular radio network of a communications infrastructure, to a WWW server. This server moves from web page to web page in dependence on the commands received, the currently selected page being output on a visual display unit local to the cell-phone user and intended for use by passers-by.

DE 44 24 380 discloses a system in which broadcast encrypted video signals are received by local equipment and a user of this equipment uses a mobile phone to request enablement of a decryption device of the local equipment. An administration device then controls the sending of decryption-enabling information to the local equipment in the broadcast signals. An embodiment is described in which the mobile phone is used to transmit user selection information in relation to interactive video games broadcast to the local equipment WO 99/67904 discloses a large display device that receives information for display to nearby persons. The display device is arranged to pass data via a non-contact interface to the mobile phones of persons viewing the display. This data can include contact data for a service centre which can then be contacted using the mobile phone over a telephone network.

It is an object of the present invention to facilitate the output of information from a mobile device and, more generally, to facilitate the use of local equipment by a mobile entity.

### Summary of the Invention

According to the present invention, there is provided an output method for a mobile device that has a cellular-radio transceiver, wherein the mobile device sends control data, via a cellular radio network of a communications infrastructure, to information-retrieval equipment that retrieves, in dependence on said control data, particular information and causes it to be output on an output device local to the mobile device and intended for use by passers-by; **characterised** in that the mobile device is used to browse information pages received at and displayed on the device, and upon a page of interest being found the address of that page is captured by the device for use as said control data, the information-retrieval unit using this address to retrieve the corresponding page for output by the output device.

According to another aspect of the present invention, there is provided an output system for a mobile device, the system comprising:
a mobile device with a cellular-radio transceiver for sending output requests including control data;
a communications infrastructure including a cellular radio network with which the mobile device can communicate using its cellular radio transceiver;
an output device local to the mobile device and intended for use by passers-by; and
information-retrieval equipment associated with the output device and connected to the communications infrastructure for receiving output requests from the mobile device , the information-retrieval equipment being arranged to retrieve, in dependence on control data in a received output request, particular information and to cause the retrieved particular information to be output via the associated output device;
**characterised** in that the mobile device is arranged to fetch and display information pages received via the transceiver, and to capture for use as control data in an output request, the address of a displayed information page of interest to the mobile-device user; the information-retrieval equipment being arranged to use the address included as control data in a received output request to retrieve the corresponding information page for output via said output device.

### Brief Description of the Drawings

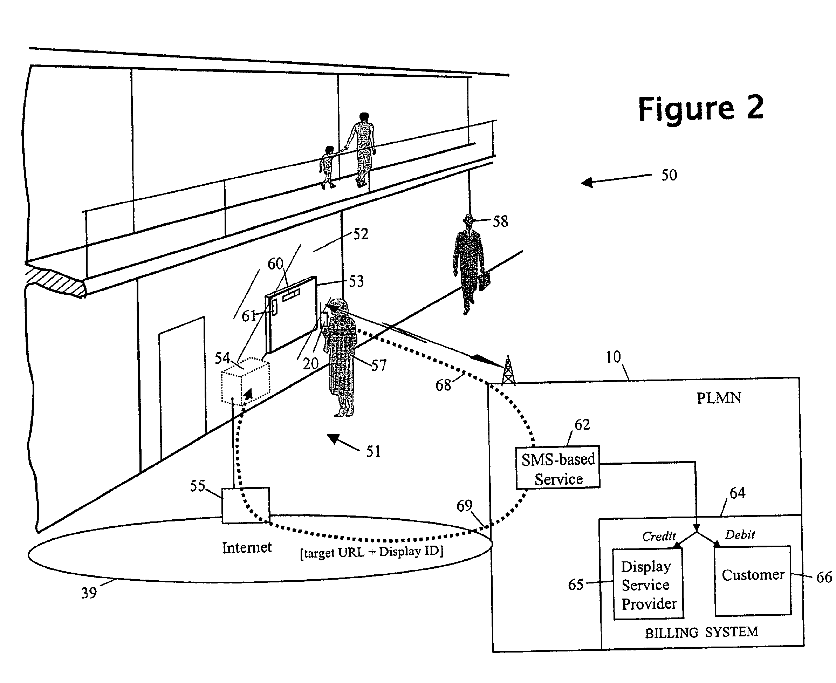

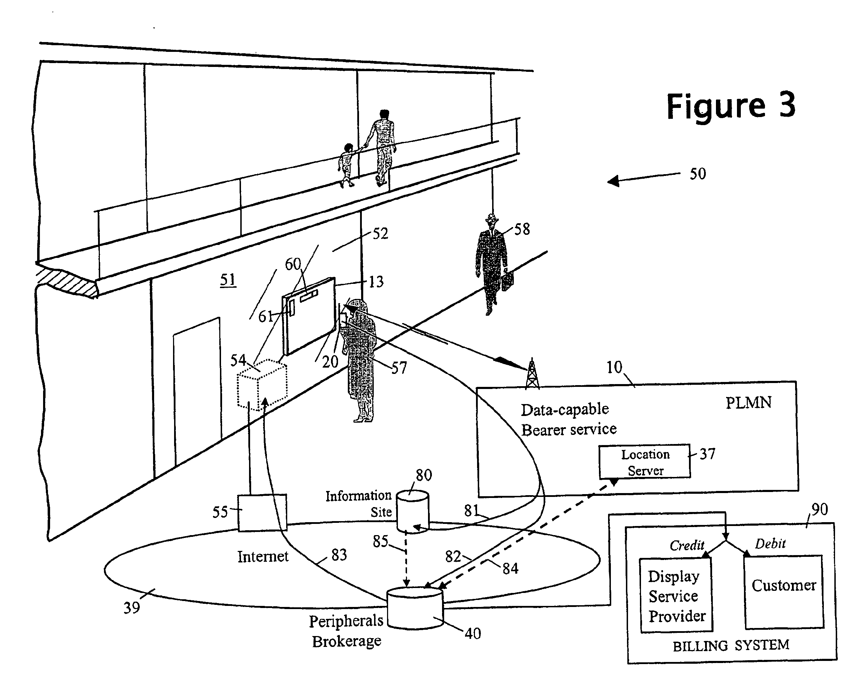

An output method and system, both embodying the present invention, for the local output of information selected by a mobile entity, will now be described, by way of non-limiting example, with reference to the accompanying diagrammatic drawings, in which:
- **. Figure 1**: is a diagram of a known communications infrastructure usable for transferring voice and data to/from a mobile entity;
- **. Figure 2**: is a diagram of a mobile entity communicating, via a mobile cellular radio network, with a display device provided in a shop window; and
- **. Figure 3**: is a diagram of a mobile entity communicating, via a mobile cellular radio network and an internet service system, with a display device provided in a shop window.

### Best Mode of Carrying Out the Invention

Local-equipment usage methods and systems embodying the invention will now be described with reference to Figures 2 and 3. It is to be understood that the present invention is not limited to the specifics of the mobile entity and communication infrastructure shown in Figures 2 and 3 and the generalisations discussed above in relation to Figure 1 regarding these elements apply equally to the described embodiments.

Figure 2 depicts part of a shopping mall 50 and, in particular, a shop 51 with a display window 52 through which passers-by 57, 58 can see an electronic display 53 (for example, a video monitor or LED display). The display 53 is used both for displaying promotional and other information (generally referred to below as "content") selected by the shop, and for displaying content provided or selected by passers-by using mobile devices 20. In Figure 2, passer-by (or "user") 57 is shown as using the display for viewing content selected by the user, this content being, for example, information held on a particular web page.

More particularly, display 53 is controlled by an associated processor 54 (e.g. a PC) that has internet access via appropriate access means 55 which preferably provide a permanent internet connection. The processor 54 runs browser software enabling it to display, on display 53, web pages retrieved from web servers (not shown) connected to the internet 39.

Mobile device 20 comprises a WAP-enabled cell phone enabling the user to connect to internet websites via a data-capable bearer service of PLMN in the manner outlined above with reference to Figure 1. The user 57 frustrated by the small size screen display of the device 20,decides that they want to display a particular web page on a larger screen. Since the user is away from their home and office, the user decides to use the display 53.

The user first captures the URL of the desired web page (for example, by saving it as a "favorite"). The user then ascertains a contact number for the display, this number being shown on the display itself, for example in display field 60. This contact number is in the form of a telephone number. The user now composes an SMS (Short Message Service) message that includes the URL of the web page to be displayed - preferably the device 20 includes a utility program for converting the URL of a selected "favorite" into a sequence of numeric keypad key presses suitable for representing the characters of the URL in a standard format, thereby avoiding the need for the user to do this translation.

The user then transmits the SMS message. The message is received by SMS service center 62 of PLMN 10 which recognises the SMS contact number as being one associated with equipment, such as display 53, available for public use. The SMS processor 62 looks up the internet address of the device 53 (or, rather, of processor 54) and then sends on an output request message to the processor 54 via the internet; the message includes the URL of the web page to be displayed. On receiving the output request, processor 54 extracts the URL of the desired web page, fetches the page over the internet and displays it on screen 53. Typically, the web page will be displayed for a fixed period (for example, 60 seconds) with the user being given the opportunity to continue the display for a further period by sending a repeat message. If other output requests have been received by processor 54 and are waiting to be output on screen 53, then any display extension in respect of a particular page is restricted to a maximum period (for example, a maximum extension equal to the initial period); however, if no other requests are pending, then the user is allowed to extend their display period for multiple extension periods.

If there are pending requests these are organised into a queue according to a predetermined queuing regime (typically, though not necessarily, a first come, first served, regime). The current queue status is displayed in display field 61 in the form of a list showing an element of the information to be displayed or of its URL, this element being sufficient to enable a user to identify their request and thus their queue position; in this manner, user identity, even if known to the processor 54, is kept confidential. Rather than using an element related to the information to be displayed to identify the user in the queue list, part of the user's mobile phone number can be used (in which case, service center 62 would need to include this part in the output request), or an identifier (such as a name or number) included for this purpose by the user in their original request.

In order to ensure that only current passers-by use the display 53 and not a remote user who may know the contact number for the display, the processor 54 preferably causes the display to display a code (for example, a three digit code added to the end of the contact number in display field 60), this code changing a regular intervals (for example every minute) in a random manner. The user is required to include this code in their SMS message and the SMS service center 62 passes on the code in the request message to processor 54. Processor 54 compares the received code against the current code (and, preferably against its last two values) and discards any message where a code match is not found. Of course, other methods can be used for locally passing a code from the output equipment (processor 54, display 53) to the mobile device; thus where both the mobile device and output equipment are equipped with short-range communication devices (such as Bluetooth wireless system) them this system can be used to pass on a variable code to the mobile device.

As regards payment for use of the display 53, since the display is used part of the time for promoting the shop 51, the shop management could opt not to charge for the service. However, in the present embodiment a simple arrangement is provided by which the shop can be compensated for the use of display 53 by passers-by. More particularly, since the user 57 already has a billing relationship with the operator of the mobile network 10, it is convenient to arrange for the mobile operator also to bill the user for use of display 53 with the shop owner being appropriately credited for such use. This is done by having the SMS service center 62 notify the billing system 64 of PLMN 10 that not only has a short message been sent by user 57, but also that it relates to the use of equipment of a particular party (the shop owner). The shop owner has a pre-established relationship with the mobile operator, having had to register the display 53 with the latter in order for the output service to be established (registration involves having a contact number assigned and associated with the internet address of processor 54). The billing system 64 of PLMN 10 on notification of the billing details (subscriber identity, output service provider identity) debits the subscriber's account 66 and credits the output service provider's account 65. The subscriber's account can be a pre-pay account, a monthly account or any other type of account. Because each SMS message sent by user 57 for use of the display represents a fixed period of usage, there is no usage-duration metering required.

In view of the limited form of the input device (mobile device 20) and the discrete nature of the communication between the device 20 and processor 54, the display of a follow-on web page by selecting a hyperlink on the currently-displayed web page is not straightforward. In many cases this will not matter as the information of interest to the user will be on the page initially selected for display. However, in order to facilitate selection of hyperlinks by device 20, the processor 54 preferably includes software for scanning a web page, recognising hyperlinks in the page and numbering these links, the allocated number being displayed overlaid on the link. The processor maintains a table for the currently-displayed page associating link number to hyperlink URL. The user 57 can then select a link by including the displayed link number in an SMS message addressed to the processor 54 (advantageously, the number includes a prefix that the processor 54 recognises as indicating that the identified link is to be followed, the processor thereupon retrieving the corresponding URL from the number/URL table and retrieving the required page over the internet).

It will be appreciated that the same arrangement can be used to have selected content output to a local printer or, indeed, for enabling use, and related billing for such use, of any local equipment including a vending machine.

It may be noted that the display screen 53 is located behind the shop window 52 and is physically inaccessible to passers-by. The display is thus secure and can be operated even when the shop is closed. For output devices in the form of printers, it is possible to devise hard-copy output slots that offer security for the printer from passers-by.

The Figure 3 embodiment, like that of Figure 2, involves the user 57 communicating using the PLMN 10 rather than by using a short-range link. However, this time the PLMN is simply used to provide a data-capable bearer service providing the user access to the internet (either with the PLMN operator providing such access or with the user connecting through the telephone system to their own Internet Access Provider (not shown). In the present example, the user 57 initially the internet connection to browse internet information site 80 (see arrow 81) through a browser facility of their device 20 (for example using a WAP browser).

The operator of the display 53 is registered with a peripherals brokerage service system 40 that is connected to the internet 39. Other operators of equipment that is available for public use are also registered with the brokerage service 40. Furthermore, in the present example, user 57 is also a registered user of the service 40 and has been allocated a username and password.

When user 57, in the course of browsing site 80, determines that they want to display the page they are currently viewing on display 53, the user captures the URL of the page and sends it to the brokerage service 40 (see arrow 82) together with an identity code of the display 53. Brokerage service 40 first checks the identity of the user (by asking for the user's username and password) and then contacts the processor 54 (arrow 83) to have it display the web page requested by user 57. The brokerage service thus acts as a proxy for the user 57.

Brokerage service 40 runs a billing system 90 similar to the billing system 45 of PLMN 10 whereby the user 57 is debited an amount for use of the display 53 and the shop owner is credited an amount for use of the display, this latter amount generally being less than the former amount so as to provide a revenue stream to the brokerage service.

Rather than the user 57 having to supply an identifier of display 53 to the brokerage service 40, the latter could automatically determine which display is to be used on the basis of the user's current location. This is achieved by the brokerage service 40 contacting a location server of PLMN 10 (see arrow 84) to ascertain the location of device 20 (service 40 being, for example, pre-authorised by user 57 to obtain such location information). To avoid any confusion, the service 40 preferably returns to the user an indication of precise location of the display that the service intends to use - if this location does not match with the user's expectation, the user can cancel the display request.

As another variant, the site 80 can provide on each page a facility for the user 57 to opt to have the page output, the selection of this option causing the site 80 to send the page URL and the current IP address of the user 57 to the brokerage service 40 (see arrow 85), the service 40 then taking over management of the display of the page in the manner described above.

Rather than the brokerage service running its own billing system 90 for charging the user 57 and crediting the shop owner, the service 40 could arrange with the PLMN operator to use the billing system of the latter.

The items of equipment such as display 53 that the user can access, could in fact be provided to shops, such as the shop 51, and other public locations by the brokerage service rather than the shop owners or other bodies. In this case, the brokerage service would take a greater proportion of the revenues generated.

In an alternative financing model it is the sites that register with the brokerage service rather than the user 57, the sites paying a flat rate for the service offered by the brokerage service system whilst the user pays nothing. One advantage of this arrangement is that only approved sites are permitted to use the display 53 so that the risk of offensive material being displayed is reduced.

It will be appreciated that many variants are possible to the above described embodiments. For example, in the Figure 2 embodiment, the SMS service center is effectively providing an IN (Intelligent Network) service to the user 57 by translating a dialled number to an internet address and effecting a request to that address. This IN service can be implemented by more traditional IN elements of the PLMN or a connected PSTN.

Again with reference to the Figure 2 embodiment, the user 57 can use the PLMN 10 and the PSTN (Public Switched Telephone Network) to place a telephone call to the shop premises 51 and then use the resultant voice circuit to pass the URL of the page to be displayed. In this case, equipment either in the PLMN or PSTN can be set to recognise the dialled number as one corresponding to a request to use publicly-available equipment of a particular party and effect the appropriate billing operations.

In another variant, the user connects to the processor 54 over the internet with the PLMN simply providing a channel to the user's preferred Internet Access Provider, the latter having a billing relationship with the user and being responsible for recognising that the user is requesting use of publicly-available equipment and for effecting appropriate billing operations.

Where the information to be output is audio in form, then the output equipment takes the form of an audio output device. The output equipment may take other forms as appropriate to the form of the information to be output.. The information identifier may take forms other than a URL such as a different address form or item title.

## Claims

1. An output method for a mobile device (20) that has a cellular-radio transceiver (22), wherein the mobile device (20) sends control data, via a cellular radio network (10) of a communications infrastructure(10, 39), to information-retrieval equipment (54) that retrieves, in dependence on said control data, particular information and causes it to be output on an output device (53) local to the mobile device (20) and intended for use by passers-by; **characterised in that** the mobile device (20) is used to browse information pages received at and displayed on the device, and upon a page of interest being found the address of that page is captured by the device (20) for use as said control data, the information-retrieval unit (54) using this address to retrieve the corresponding page for output by the output device (53).

2. A method according to claim 1, wherein the output device (53) displays or otherwise outputs a code that changes with time, a value of this code being sent by the mobile device (20) to the information-retrieval equipment (54) along with the control data, the information-retrieval equipment only causing the output device (54) to display said particular information indicated by the control data if the code value received from the mobile device (20) matches the current or at least a recent value of the code displayed by the output device (53).

3. A method according to claim 1, wherein the communications infrastructure (10, 39) ascertains the location of the mobile device (20) and routes said control data to information-retrieval equipment (54) associated with an output device (53) known to be local to the location of the mobile device (20).

4. A method according to claim 1 or claim 2, wherein the communications infrastructure (10, 39) includes the public internet (39) to which the information-retrieval equipment (54) is connected; the communications infrastructure (10, 39) providing a routing service that translates a destination phone number received from the mobile device (20) into an internet address for the information-retrieval equipment (54) and forwards on said control data to the information-retrieval equipment (54) at said internet address.

5. A method according to claim 4, wherein the mobile device (20) sends the control data using a short-message service (62) of the mobile cellular radio network (10) of the communications infrastructure (10, 39).

6. A method according to any one of claims 1 to 5, wherein the user (57) of the mobile device (20) has a pre-existing billing relation with the cellular radio network (10), the cellular network providing a billing service for billing use of the information-retrieval equipment (54) to the user of the mobile device (20).

7. A method according to any one of claims 1 to 5, wherein the communications infrastructure (10, 39) includes the internet (39), said control data being sent from the mobile device (20) through the cellular radio network (10) to the internet (39) and via the latter to the information-retrieval equipment (54), an operator of a component (40) of the communications infrastructure other than of the cellular radio network (10), having a pre-existing billing relation with the user (57) and providing a billing service for billing use of the information-retrieval equipment (54) to the user of the mobile device (20).

8. A method according to any one of claims 1 to 7, wherein the output device is a visual display (53).

9. A method according to any one of claims 1 to 7, wherein the output device is a printer.

10. An output system for a mobile device (20), the system comprising:
a mobile device (20) with a cellular-radio transceiver (220 for sending output requests including control data;
a communications infrastructure (10, 39) including a cellular radio network (10) with which the mobile device (20) can communicate using its cellular radio transceiver (22);
an output device (53) local to the mobile device (20) and intended for use by passers-by, and
information-retrieval equipment associated with the output device and connected to the communications infrastructure (10, 39) for receiving output requests from the mobile device (20), the information-retrieval equipment (54) being arranged to retrieve, in dependence on control data in a received output request, particular information and to cause the retrieved particular information to be output via the associated output device (53);
**characterised in that** the mobile device (20) is arranged to fetch and display information pages received via the transceiver (22), and to capture for use as control data in an output request, the address of a displayed information page of interest to the mobile-device user; the information-retrieval equipment (54) being arranged to use the address included as control data in a received output request to retrieve the corresponding information page for output via said output device (53).

11. An output system according to claim 10, wherein the output device (53) is arranged to output to nearby persons a time-varying local code; the mobile device being arranged to include a value of this local code in a said output request along with the control data, and the information-retrieval equipment (54) including a check arrangement for inhibiting output of said particular information indicated by the control data in a received output request unless that request includes a local-code value matching the most recent, or one of the most recent, codes output by the output device (53).

12. An output system according to claim 10 or 11, wherein the output device is a visual display (53).

13. An output system according to claim 10 or 11, wherein the output device is a printer.

14. An output system according to any one of claims 10 to 13, wherein said information page address is a web page address, the information-retrieval equipment (54) being arranged to use this address to fetch the web page over the public internet (39).

15. An output system according to claim 10, wherein the communications infrastructure (10, 39) includes location discovery means (37) for ascertaining the location of the mobile device (20) and routing means (40) for routing said output request to information-retrieval equipment (54) associated with an output device (53) known to be local to the location of the mobile device 20).

16. An output system according to claim 10, wherein the communications infrastructure (10, 39) includes the public internet (39) to which the information-retrieval equipment (54) is connected; the communications infrastructure further including a routing arrangement that translates a destination phone number received from the mobile device (20) in association with a said output request into an internet address for the information-retrieval equipment (54) and forwards on said output request to the information-retrieval equipment at said address.

## Patentansprüche

1. Ein Ausgabeverfahren für eine Mobilvorrichtung (20), die ein Zellularfunksende-/-empfangsgerät (22) aufweist, wobei die Mobilvorrichtung (20) über ein Zellularfunknetzwerk (10) einer Kommunikationsinfrastruktur (10, 39) Steuerdaten an eine Informationswiedergewinnungsausrüstung (54) sendet, die in Abhängigkeit von den Steuerdaten bestimmte Informationen wiedergewinnt und veranlasst, dass dieselben an einer Ausgabevorrichtung (53), die sich am Ort der Mobilvorrichtung (20) befindet und zur Nutzung durch Passanten gedacht ist, ausgegeben werden; **dadurch gekennzeichnet, dass** die Mobilvorrichtung (20) dazu verwendet wird, Informationsseiten, die an der Vorrichtung empfangen und angezeigt werden, zu durchsuchen, und nachdem eine interessierende Seite gefunden wird, wird die Adresse dieser Seite durch die Vorrichtung (20) zur Verwendung als die Steuerdaten erfasst, wobei die Informationswiedergewinnungseinheit (54) diese Adresse dazu verwendet, die entsprechende Seite zur Ausgabe durch die Ausgabevorrichtung (53) wiederzugewinnen.

2. Ein Verfahren gemäß Anspruch 1, bei dem die Ausgabevorrichtung (53) einen Code, der sich mit der Zeit ändert, anzeigt oder auf andere Weise ausgibt, wobei ein Wert dieses Codes durch die Mobilvorrichtung (20) zusammen mit den Steuerdaten an die Informationswiedergewinnungsausrüstung (54) gesendet wird, wobei die Informationswiedergewinnungsausrüstung lediglich bewirkt, dass die Ausgabevorrichtung (54) die jeweiligen durch die Steuerdaten angegebenen Informationen anzeigt, wenn der von der Mobilvorrichtung (20) empfangene Codewert mit dem aktuellen oder zumindest einem kürzlichen Wert des durch die Ausgabevorrichtung (53) angezeigten Codes übereinstimmt.

3. Ein Verfahren gemäß Anspruch 1, bei dem die Kommunikationsinfrastruktur (10, 39) die Position der Mobilvorrichtung (20) feststellt und die Steuerdaten an eine Informationswiedergewinnungsausrüstung (54) leitet, die einer Ausgabevorrichtung (53) zugeordnet ist, die sich bekanntermaßen am Ort der Mobilvorrichtung (20) befindet.

4. Ein Verfahren gemäß Anspruch 1 oder 2, bei dem die Kommunikationsinfrastruktur (10, 39) das öffentliche Internet (39) umfasst, mit dem die Informationswiedergewinnungsausrüstung (54) verbunden ist; wobei die Kommunikationsinfrastruktur (10, 39) einen Weiterleitungsdienst liefert, der eine von der Mobilvorrichtung (20) empfangene Zieltelefonnummer in eine Internetadresse für die Informationswiedergewinnungsausrüstung (54) übersetzt und die Steuerdaten an die Informationswiedergewinnungsausrüstung (54) an dieser Internet-Adresse weiterleitet.

5. Ein Verfahren gemäß Anspruch 4, bei dem die Mobilvorrichtung (20) die Steuerdaten unter Verwendung eines Kurznachrichtendienstes (62) des Mobilzellularfunknetzwerks (10) der Kommunikationsinfrastruktur (10, 39) sendet.

6. Ein Verfahren gemäß einem der Ansprüche 1 bis 5, bei dem der Benutzer (57) der Mobilvorrichtung (20) eine vorab existierende Verrechnungsbeziehung zu dem Zellularfunknetzwerk (10) hat, wobei das Zellularnetzwerk dem Benutzer der Mobilvorrichtung (20) einen Verrechnungsdienst zum Verrechnen einer Nutzung der Informationswiedergewinnungsausrüstung (54) bereitstellt.

7. Ein Verfahren gemäß einem der Ansprüche 1 bis 5, bei dem die Kommunikationsinfrastruktur (10, 39) das Internet (39) umfasst, wobei die Steuerdaten von der Mobilvorrichtung (20) durch das Zellularfunknetzwerk (10) an das Internet (39) und über Letzteres an die Informationswiedergewinnungsausrüstung (54) gesendet werden, wobei ein Betreiber einer anderen Komponente (40) der Kommunikationsinfrastruktur als der des Zellularfunknetzwerks (10) eine vorab existierende Verrechnungsbeziehung mit dem Benutzer (57) aufweist und dem Benutzer der Mobilvorrichtung (20) einen Verrechnungsdienst zum Verrechnen einer Nutzung der Informationswiedergewinnungsausrüstung (54) bereitstellt.

8. Ein Verfahren gemäß einem der Ansprüche 1 bis 7, bei dem die Ausgabevorrichtung eine visuelle Anzeige (53) ist.

9. Ein Verfahren gemäß einem der Ansprüche 1 bis 7, bei dem die Ausgabevorrichtung ein Drucker ist.

10. Ein Ausgabesystem für eine Mobilvorrichtung (20), wobei das System folgende Merkmale aufweist:
eine Mobilvorrichtung (20) mit einem Zellularfunksende-/-empfangsgerät (22) zum Senden von Ausgabeanforderungen, die Steuerdaten umfassen;
eine Kommunikationsinfrastruktur (10, 39), die ein Zellularfunknetzwerk (10) umfasst, mit dem die Mobilvorrichtung (20) unter Verwendung ihres Zellularfunksende-/-empfangsgeräts (22) kommunizieren kann;
eine Ausgabevorrichtung (53), die sich am Ort der Mobilvorrichtung (20) befindet und die zur Verwendung durch Passanten gedacht ist; und
eine Informationswiedergewinnungsausrüstung, die der Ausgabevorrichtung zugeordnet und mit der Kommunikationsinfrastruktur (10, 39) verbunden ist, zum Empfangen von Ausgabeanforderungen von der Mobilvorrichtung (20), wobei die Informationswiedergewinnungsausrüstung (54) dazu angeordnet ist, in Abhängigkeit von Steuerdaten in einer empfangenen Ausgabeanforderung bestimmte Informationen wiederzugewinnen und zu bewirken, dass die wiedergewonnenen bestimmten Informationen über die zugeordnete Ausgabevorrichtung (53) ausgegeben werden;
**dadurch gekennzeichnet, dass** die Mobilvorrichtung (20) dazu angeordnet ist, Informationsseiten, die über das Sende-/Empfangsgerät (22) empfangen werden, abzurufen und anzuzeigen, und zur Verwendung als Steuerdaten in einer Ausgabeanforderung die Adresse einer für den Benutzer der Mobilvorrichtung interessanten angezeigten Informationsseite zu erfassen; wobei die Informationswiedergewinnungsausrüstung (54) dazu angeordnet ist, die als Steuerdaten enthaltene Adresse in einer empfangenen Ausgabeanforderung zu verwenden, um die entsprechende Informationsseite zur Ausgabe über die Ausgabevorrichtung (53) wiederzugewinnen.

11. Ein Ausgabesystem gemäß Anspruch 10, bei dem die Ausgabevorrichtung (53) dazu angeordnet ist, einen zeitlich variierenden lokalen Code an in der Nähe befindliche Personen auszugeben; wobei die Mobilvorrichtung dazu angeordnet ist, einen Wert dieses lokalen Codes zusammen mit den Steuerdaten in eine der Ausgabeanforderungen aufzunehmen, und wobei die Informationswiedergewinnungsausrüstung (54) eine Prüfanordnung zum Behindern einer Ausgabe der bestimmten Informationen umfasst, die durch die Steuerdaten in einer empfangenen Ausgabeanforderung angegeben werden, es sei denn, diese Anforderung umfasst einen Lokalcodewert, der mit dem jüngsten oder einem der jüngsten durch die Ausgabevorrichtung (53) ausgegebenen Code(s) übereinstimmt.

12. Ein Ausgabesystem gemäß Anspruch 10 oder 11, bei dem die Ausgabevorrichtung eine visuelle Anzeige (53) ist.

13. Ein Ausgabesystem gemäß Anspruch 10 oder 11, bei dem die Ausgabevorrichtung ein Drucker ist.

14. Ein Ausgabesystem gemäß einem der Ansprüche 10 bis 13, bei dem die Informationsseitenadresse eine Webseitenadresse ist, wobei die Informationswiedergewinnungsausrüstung (54) dazu angeordnet ist, diese Adresse zu verwenden, um die Webseite über das öffentliche Internet (39) abzurufen.

15. Ein Ausgabesystem gemäß Anspruch 10, bei dem die Kommunikationsinfrastruktur (10, 39) eine Positionsentdeckungseinrichtung (37) zum Feststellen der Position der Mobilvorrichtung (20) und eine Weiterleitungseinrichtung (40) zum Weiterleiten der Ausgabeanforderung an eine Informationswiedergewinnungsausrüstung (54) umfasst, die einer Ausgabevorrichtung (53) zugeordnet ist, die sich bekanntermaßen am Ort der Position der Mobilvorrichtung (20) befindet.

16. Ein Ausgabesystem gemäß Anspruch 10, bei dem die Kommunikationsinfrastruktur (10, 39) das öffentliche Internet (39) umfasst, mit dem die Informationswiedergewinnungsausrüstung (54) verbunden ist; wobei die Kommunikationsinfrastruktur des weiteren eine Weiterleitungsanordnung umfasst, die eine Zieltelefonnummer, die in Verbindung mit der Ausgabeanforderung von der Mobilvorrichtung (20) empfangen wird, in eine Internetadresse für die Informationswiedergewinnungsausrüstung (54) übersetzt und die Ausgabeanforderung an die Informationswiedergewinnungsausrüstung an dieser Adresse weiterleitet.

## Revendications

1. Procédé de sortie pour un dispositif mobile (20) pourvu d'un transmetteur récepteur radiocellulaire (22), dans lequel le dispositif mobile (20) envoie des données de commande, par l'intermédiaire d'un réseau radiocellulaire (10) d'une infrastructure de communications (10, 39), à un équipement de récupération (54) d'information qui récupère, en fonction desdites données de commande, une information particulière et l'amène à être sortie sur un dispositif de sortie (53) local au dispositif mobile (20) et prévu pour être utilisé par des passants; **caractérisé en ce que** le dispositif mobile (20) est utilisé pour naviguer sur des pages d'informations reçues et affichées sur le dispositif, et **en ce que**, lorsqu'une page intéressante a été trouvée, l'adresse de cette page est captée par le dispositif (20) pour être utilisée pour constituer lesdites données de commande, l'unité de récupération (54) d'information utilisant l'adresse pour récupérer la page correspondante pour la sortir au moyen du dispositif de sortie (53).

2. Procédé selon la revendication 1, dans lequel le dispositif de sortie (53) affiche ou sort d'une autre manière un code qui varie dans le temps, une valeur de ce code accompagnée des données de commande étant envoyée par le dispositif mobile (20) à l'équipement de récupération (54) d'information, l'équipement de récupération d'information n'amenant le dispositif de sortie (54) à afficher ladite information particulière indiquée par les données de commande que si la valeur de code reçue du dispositif mobile (20) concorde avec la valeur actuelle ou au moins une valeur récente du code affichée par le dispositif de sortie (53).

3. Procédé selon la revendication 1, dans lequel l'infrastructure de communications (10, 39) constate l'emplacement du dispositif mobile (20) et achemine lesdites données de commande vers ledit équipement de récupération (54) d'information associé au dispositif de sortie (53) connu pour être local à l'emplacement du dispositif mobile (20).

4. Procédé selon la revendication 1 ou la revendication 2, dans lequel l'infrastructure de communications (10, 39) inclut l'internet public (39) auquel l'équipement de récupération (54) d'information est connecté; l'infrastructure de communications (10, 39) assurant un service d'acheminement qui traduit un numéro de téléphone de destination reçu du dispositif mobile (20) en une adresse d'internet pour l'équipement de récupération (54) d'information et qui transmet lesdites données de commande à l'équipement de récupération (54) d'information à ladite adresse d'internet.

5. Procédé selon la revendication 4, dans lequel le dispositif mobile (20) envoie les données de commande en utilisant un service (62) de mini-messages texte (SMS, abrégé de short message service) du réseau radio cellulaire (10) de l'infrastructure de communications (10, 39).

6. Procédé selon l'une quelconque des revendications précédentes, dans lequel l'utilisateur (57) du dispositif mobile (20) possède une relation préexistante de facturation avec le réseau radio cellulaire (10), le réseau cellulaire fournissant un service de facturation pour facturer à l'utilisateur du dispositif mobile (20) une utilisation de l'équipement de récupération (54) d'information.

7. Procédé selon l'une quelconque des revendications 1 à 5 dans lequel l'infrastructure de communications (10, 39) inclut l'internet (39), lesdites données de commande étant envoyées du dispositif mobile (20) par l'intermédiaire du réseau radio cellulaire (10) à l'internet (39) et par l'intermédiaire de ce dernier à l'équipement de récupération (54) d'information, un opérateur d'un composant (40) d'infrastructure de communications, autre que le réseau radio cellulaire (10), possédant une relation préexistante de facturation avec l'utilisateur (57) et fournissant un service de facturation pour facturer à l'utilisateur du dispositif mobile (20) une utilisation de l'équipement de récupération (54) d'information.

8. Procédé selon l'une quelconque des revendications précédentes, dans lequel le dispositif de sortie est un affichage visuel (53).

9. Procédé selon l'une quelconque des revendications 1 à 7 dans lequel le dispositif de sortie est une imprimante.

10. Système de sortie pour un dispositif mobile (20), le système comprenant:
• un dispositif mobile (20) pourvu d'un transmetteur-récepteur radio cellulaire (220) pour envoyer des demandes de sortie incluant des données de commande;
• une infrastructure de communications (10, 39) incluant un réseau radio cellulaire (10) avec lequel le dispositif mobile (20) peut communiquer en utilisant son transmetteur-récepteur radiocellulaire (22);
• un dispositif de sortie (53), local au dispositif mobile (20) et prévu pour être utilisé par des passants; et
• un équipement de récupération d'information associé au dispositif de sortie et connecté à l'infrastructure de communications (10, 39) pour recevoir des demandes de sortie venant du dispositif mobile (20), l'équipement de récupération (54) d'information étant agencé pour récupérer une information particulière, en fonction des données de commande contenues dans une demande de sortie reçue, et pour amener l'information particulière récupérée à être sortie par l'intermédiaire du dispositif de sortie associé (53);
**caractérisé en ce que** le dispositif mobile (20) est agencé de manière à extraire et afficher des pages d'information reçues par l'intermédiaire du transmetteur-récepteur (22), et à capter l'adresse d'une page d'information affichée, intéressante pour l'utilisateur du dispositif mobile, pour qu'elle soit utilisée comme données de commande dans une demande de sortie; l'équipement de récupération (54) d'information étant agencé de manière à utiliser l'adresse incluse comme données de commande dans une demande de sortie reçue pour récupérer la page d'information pour la sortir par l'intermédiaire du dispositif de sortie (53).

11. Système de sortie selon la revendication 10, dans lequel le dispositif de sortie (53) est agencé de manière à sortir à des personnes voisines un code local variant dans le temps; le dispositif mobile étant agencé de manière à inclure dans une dite demande de sortie une valeur de ce code local accompagnée des données de commande, et l'équipement de récupération (54) d'information incluant un agencement de contrôle pour empêcher la sortie de ladite information particulière indiquée par les données de commande dans une demande de sortie reçue à moins que cette demande n'inclue une valeur de code local concordant avec le code le plus récent, ou l'un des plus récents, sorti par le dispositif de sortie (53).

12. Système de sortie selon la revendication 10 ou 11, dans lequel le dispositif de sortie est un affichage visuel (53).

13. Système de sortie selon la revendication 10 ou 11, dans lequel le dispositif de sortie est une imprimante.

14. Système de sortie selon l'une quelconque des revendications 10 à 13 dans lequel ladite adresse de page d'information est une adresse de page de web, l'équipement de récupération (54) d'information étant agencé de manière à utiliser cette adresse pour extraire la page de web par l'intermédiaire de l'internet public (39).

15. Système de sortie selon la revendication 10, dans lequel l'infrastructure de communications (10, 39) inclut un moyen de découverte (37) d'emplacement pour constater l'emplacement du dispositif mobile (20) et un moyen d'acheminement (40) pour acheminer ladite demande de sortie vers un équipement de récupération (54) d'information associé à un dispositif de sortie (53) connu pour être local à l'emplacement du dispositif mobile (20).

16. Système de sortie selon la revendication 10, dans lequel l'infrastructure de communications (10, 39) inclut l'internet public (39) auquel l'équipement de récupération (54) d'information est connecté; l'infrastructure de communications incluant en outre un agencement d'acheminement qui traduit un numéro de téléphone de destination, reçu du dispositif mobile (20) en association avec une demande de sortie, en une adresse d'internet pour l'équipement de récupération (54) d'information et qui transmet ladite demande de sortie à l'équipement de récupération (54) d'information à ladite adresse d'internet.
